# EUROPÄISCHE PATENTSCHRIFT

(11) **EP 2 675 619 B1**
(45) Veröffentlichungstag und Bekanntmachung des Hinweises auf die Patenterteilung: **02.09.2020**
(21) Anmeldenummer: 12708240.2
(22) Anmeldetag: 06.02.2012
(51) Int. Cl.: B32B 7/06, B32B 27/08, B32B 27/20, B32B 27/28, G09F 3/00

(54) **TRENNFOLIE MIT RAUHER OBERFLÄCHENSTRUKTUR**
RELEASE FILM HAVING A ROUGH SURFACE STRUCTURE
FEUILLE DE SÉPARATION À STRUCTURE SUPERFICIELLE RUGUEUSE

(30) Priorität: 15.02.2011 DE 102011011296; 08.11.2011 DE 102011117831
(43) Veröffentlichungstag der Anmeldung: 25.12.2013
(73) Patentinhaber: Loparex Germany GmbH & Co. KG, 91301 Forchheim (DE)
(72) Erfinder: ENGELHARD, Heinz, 90427 Nürnberg (DE)
(74) Vertreter: Kutzenberger Wolff & Partner
(86) Internationale Anmeldenummer: PCT/EP2012/000522
(87) Internationale Veröffentlichungsnummer: WO 2012/110206

(56) Entgegenhaltungen:
- WO-A1-2011/063914
- US-A1- 2005 003 216
- US-A1- 2007 224 378

## Beschreibung

Die vorliegende Erfindung betrifft eine Trennfolie mit unebener Oberflächenstruktur, wobei die unebene Oberflächenstruktur nicht geprägt ist und nicht auf einer Schaumstruktur beruht, mit wenigstens einer Schicht (s) basierend auf wenigstens einem thermoplastischen Polymeren als Matrixpolymeren, in der feste Mikroteilchen mit einem um mindestens 10°C höheren Schmelzpunkt als den des Matrixpolymeren verteilt vorliegen, wobei zumindest eine der Oberflächen der Trennfolie mit einer Releaseschicht (b) als Außenschicht basierend auf wenigstens einem ausgehärteten Polysiloxan ausgerüstet ist, eine Verwendung einer solchen Trennfolie als ablösbare Schutz- und Abdeckfolie sowie eine Dachbahn versehen mit einer solchen Trennfolie als ablösbare Schutz- und Abdeckfolie. Trennfolien werden vielfach als abziehbare Schutzfolien für Klebebänder oder Selbstklebeetiketten eingesetzt, um ein Verkleben dieser einseitig oder beidseitig klebenden Produkte bei der Lagerung zu verhindern. Außerdem müssen sie eine hinreichende Trennwirkung gegen Klebstoffe aufweisen.

Aus dem Stand der Technik wie z.B. aus EP 1 277 802 A1 oder EP 0 769 540 A2 sind bereits Trennfolien bekannt, die zur Erzielung einer guten Trennwirkung zumindest einseitig silikonisiert sind.

Für einige technische Anwendungen, wie z. B. für bei Umgebungstemperatur bereits stark klebende Materialien, reicht die Trennwirkung der bekannten Trennfolien oftmals nicht aus, so dass es bei der Handhabung entsprechender klebefähiger Artikel, insbesondere bei der Entfernung der Trennfolie, zu Schwierigkeiten kommen kann.

Zur Verbesserung der Trennwirkung herkömmlicher Trennfolien gegenüber solchen stark klebenden Materialien wird gemäß dem Stand der Technik empfohlen, die Trennfolien mit einer Prägestruktur auszurüsten. Nachteilig für die Trennwirkung bei einer solchen Ausrüstung mit Prägestruktur ist, dass die Prägestruktur der Trennfolie unter Druckeinwirkung wie z.B. in einem aufgerollten Zustand, unter Zugbelastung und/oder unter thermischer Belastung wie z.B. bei weiteren Verarbeitungsschritten, Schaden nehmen kann und die Trennfolie zumindest an den beschädigten Stellen eine ungenügende Trennwirkung aufweist. Auch die in US 2005/003216 A1 empfohlene Ausstattung der Oberflächenschicht von Trennfolien mit Mikroteilchen, die einen Durchmesser von ≤ 15 µm aufweisen, führt nicht zu der gewünschten Wirkung.

Es besteht daher ein Bedarf an Trennfolien, die auch eine sehr gute Trennwirkung gegenüber stark klebenden Materialien aufweisen, ohne dass die Trennfolien mit einer Prägestruktur ausgerüstet ist oder eine Schaumstruktur basierend auf expandierbaren, hohlen Teilchen aufweist, wie beispielsweise in US 2007/224378 A1 oder WO 2011/063914 A offenbart ist.

Aufgabe der vorliegenden Erfindung war es daher eine, Trennfolien zur Verfügung zu stellen, die sich auch ohne eine Prägestruktur-Ausrüstung und/oder eine Schaumstruktur durch eine ausgezeichnete Trennwirkung gegenüber Klebstoffen und/oder klebefähigen Materialien, die vorzugsweise bereits bei Umgebungstemperatur eine große Klebekraft aufweisen, auszeichnen.

Diese Aufgabe wird durch die Bereitstellung einer keine Schaumstruktur aufweisenden Trennfolie mit einer unebenen, aber nicht geprägten Oberflächenstruktur umfassend wenigstens eine Schicht (s) basierend auf wenigstens einem thermoplastischen Polymeren als Matrixpolymeren, in der feste Mikroteilchen mit einer Teilchengröße von mindestens 50 µm und mit einem um mindestens 10°C höheren Schmelzpunkt als den des Matrixpolymeren verteilt vorliegen und von deren Oberflächen zumindest eine mit einer Releaseschicht (b) als Außenschicht basierend auf wenigstens einem ausgehärteten Polysiloxan ausgerüstet ist, gelöst.

Die Schicht (s) der erfindungsgemäßen Trennfolie ist vorzugsweise aus wenigstens einem thermoplastischen Polymer ausgewählt aus der Gruppe umfassend Olefin-Homo-oder Copolymere, vorzugsweise Ethylen- und/oder Propylen-Homo-oder Copolymere, und Homo- oder Copolyamide aufgebaut.

Zum Aufbau der Schicht (s) der erfindungsgemäßen Trennfolie kann als Matrixpolymeres vorzugsweise wenigstens ein thermoplastisches Olefin-Homo-oder Copolymeres, besonders bevorzugt wenigstens ein thermoplastisches Olefin-Homo-oder Copolymeres von α,ß-ungesättigten Olefinen mit vorzugsweise 2-8 Kohlenstoffatomen eingesetzt werden. Ganz besonders bevorzugt kann die Schicht (s) aus wenigstens einem Ethylen-Homo- oder Copolymeren (PE, insbesondere LDPE oder HDPE), Propylen-Homo- oder Copolymeren (PP), Butylen-Homo- oder Copolymeren (PB), Isobutylen-Homo- oder Copolymeren (PI) oder auf Mischungen aus wenigstens zwei der genannten Polymeren, insbesondere auf einem Propylen-Homo- oder Copolymeren, aufgebaut sein.

Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegt.

Zur Herstellung der Schicht (s) eignen sich außerdem als Matrixpolymere vorzugsweise wenigstens ein Homo- oder Copolyamid ausgewählt aus der Gruppe umfassend thermoplastische aliphatische, teilaromatische oder aromatische Homo-oder Copolyamide. Diese Homo-oder Copolymamide können aus Diaminen wie aliphatischen Diaminen mit 2-10 Kohlenstoffatomen, insbesondere Hexamethylendiamin, und/oder aromatischen Diaminen mit 6-10 Kohlenstoffatomen, insbesondere p-Phenylendiamin, und aus Dicarbonsäuren wie aliphatische oder aromatische Dicarbonsäuren mit 6-14 Kohlenstoffatomen, bevorzugt Adipinsäure, Terephthalsäure oder Isophthalsäure hergestellt werden. Weiterhin können Homo-oder Copolyamide aus Lactamen mit 4-10 Kohlenstoffatomen, wie z.B. ε-Caprolactam, hergestellt werden. Erfindungsgemäß zum Einsatz kommende Polyamide sind vorzugsweise PA 6, PA 12, PA 66, PA 6I, PA 6T oder entsprechende Co-Polymere oder Mischungen aus wenigstens zwei der genannten Polyamide.

Bei der erfindungsgemäßen Trennfolie beruht die unebene Oberflächenstruktur auf in der Schicht (s) verteilten, festen Mikroteilchen, die vorzugsweise aus wenigstens einem thermoplastischen Polymer, besonders bevorzugt aus einem Olefin-Homo- oder Copolymer aufgebaut sind, und deren Schmelzpunkt um mindestens 10 °C, vorzugsweise um mindestens 30 °C, höher ist als der Schmelzpunkt des Matrixpolymeren der Schicht (s). Dies gilt auch für Mikroteilchen, die im Wesentlichen aus anorganischen Verbindungen bzw. anorganischen Materialien bestehen.

Die Mikroteilchen haben eine Teilchengröße von mindestens 50 µm, besonders bevorzugt eine Teilchengrößeverteilung von 50 µm bis 500 µm, ganz besonders bevorzugt von 50 µm bis 300 µm, ermittelt mittels mikroskopischen Aufnahmen und deren Ausmessungen. Bevorzugt werden Mikroteilchen aus Ethylen-Homo- oder Copolymeren eingesetzt, ganz besonders bevorzugt aus Polyethylenen mit einem ultrahohen Molekulargewicht, deren Schmelzpunkt vorzugsweise mindestens 240 °C, besonders bevorzugt höher als 240 °C ist.

Vorzugsweise werden in der Schicht (s) 0,1-20 Gew.-%, besonders bevorzugt 5 - 15 Gew.-%, jeweils bezogen auf das Gesamtgewicht der Schicht (s), der festen Mikroteilchen eingearbeitet.

Als anorganische Mikroteilchen können Mikroteilchen aus anorganischen Pigmenten, Füllstoffen, wie z. B. aus anorganischen Oxiden, anorganischen Carbonaten, Salzen, Gläsern, Mineralien oder Metallen verwendet werden, deren Teilchengrößen mindestens 50 µm betragen.

Vorzugsweise weist die Schicht (s) eine Dicke von 10 bis 100 µm, besonders bevorzugt von 5 bis 50 µm auf, besonders bevorzugt von 10 bis 20 µm auf. Vorzugsweise ist die Schicht (s) nicht orientiert.

Zur Herstellung der Releaseschicht (b) der erfindungsgemäßen Trennfolie werden aushärtbare Polysiloxane eingesetzt.

Unter dem Begriff "Polysiloxan" werden im Sinne der vorliegenden Erfindung Verbindungen verstanden, deren Polymerketten abwechselnd aus Silicium- und Sauerstoffatomen aufgebaut sind. Ein Polysiloxan basiert auf n wiederkehrenden Siloxan-Einheiten (-[Si(R₂)-O]-)ₙ, welche jeweils unabhängig voneinander mit zwei organischen Resten R disubstituiert sind, wobei R vorzugsweise jeweils für R¹ oder OR¹ steht und R¹ jeweils für einen Alkyl-Rest oder einen Aryl-Rest steht. Vorzugsweise basiert das ausgehärtete Polysiloxan auf einer wiederkehrenden Dialkylsiloxan-Einheit oder auf einer wiederkehrenden Alkylaryl-Siloxan-Einheit. Je nachdem, wie viele Si-O-Bindungen eine einzelne Siloxan-Einheit, jeweils bezogen auf ein vierwertiges Siliciumatom, aufweist, lassen sich diese Einheiten in endständige monofunktionelle Siloxane (M) mit einer Si-O-Bindung, difunktionelle Siloxane (D) mit zwei Si-O-Bindungen, trifunktionelle Siloxane (T) mit drei Si-O-Bindungen und tetrafunktionelle Siloxane (Q) mit vier Si-O-Bindungen unterscheiden. Vorzugsweise weist das ausgehärtete Polysiloxan eine vernetzte ring- oder kettenförmige, besonders bevorzugt eine vernetzte kettenförmige Struktur auf, welche durch (D)-, (T)-, und/oder (Q)-Einheiten zu einem zwei-oder dreidimensionalen Netzwerk verknüpft ist. Die Anzahl n der wiederkehrenden Siloxan-Einheiten [Si(R₂)-O]-)ₙ in der Polysiloxankette wird als Polymerisationsgrad des Polysiloxans bezeichnet.

Die Releaseschicht (b) ist vorzugsweise aus wenigstens einem Polysiloxan ausgewählt aus der Gruppe umfassend additionsvernetzte, vorzugsweise metallkatalysiert additionsvernetzte, kondensationsvernetzte, radikalisch vernetzte, kationisch vernetzte und durch Feuchtigkeitseinwirkung vernetzte Polysiloxane aufgebaut.

Vorzugsweise ist die Releaseschicht (b) aus wenigstens einem ausgehärteten Polysiloxan aufgebaut, das durch thermische Aushärtung, durch Aushärtung mit elektromagnetischer Strahlung, vorzugsweise durch UV-Strahlung, oder durch Feuchtigkeitseinwirkung ausgehärtet wurde.

Thermisch ausgehärtete Polysiloxane werden durch thermische Hydrosilylierung von Silan-Funktionen aufweisenden Polysiloxanen mit einer zumindest eine Kohlenstoff-Doppelbindung aufweisenden Verbindung erhalten. Bei den durch elektromagnetische Strahlung ausgehärteten Polysiloxanen ist die die Vernetzung der Polysiloxane durch elektromagnetische Strahlung, vorzugsweise durch UV-Strahlung, erfolgt. Die durch Einwirkung von Feuchtigkeit, vorzugsweise von Wasser, vernetzten Polysiloxanen werden durch eine Polykondensationsreaktion erhalten, bei der wenigstens eine Silan-Funktion und wenigstens eine Alkoxy-Gruppe oder wenigstens eine Alkoxysilan-Gruppe unter Abspaltung wenigstens eines Moleküls Alkohol eine Si-O-Bindung ausbilden. Die auszuhärtenden Polysiloxane weisen daher jeweils die für die Vernetzung benötigten miteinander reagierenden funktionellen Gruppen auf.

Vorzugsweise enthält die Releaseschicht (b) wenigstens ein Verlaufshilfsmittel und/oder wenigstens ein Verankerungshilfsmittel.

In einer bevorzugten Ausführungsform enthält die Releaseschicht (b) das Verlaufshilfsmittel in einer Menge von 1-10 Gew.-% und/oder das Verankerungshilfsmittel in einer Menge von 1-5 Gew.-%, jeweils bezogen auf das Gesamtgewicht der Releaseschicht (b).

Als Verlaufshilfsmittel zur Herstellung der Releaseschicht (b) geeignet ist wenigstens ein Polysiloxan, welche wenigstens eine, vorzugsweise endständige, funktionelle Gruppe ausgewählt aus der Gruppe umfassend zumindest eine Kohlenstoff-Doppelbindung aufweisende funktionelle Gruppen, vorzugsweise Vinyl-Gruppen, Allyl-Gruppen, (Meth)acrylsäure-Gruppen und (Meth)acrylsäurederivat-Gruppen, aufweist. Dem Fachmann ist hierbei klar, dass die zur Vernetzung eingesetzte(n) funktionelle(n) Gruppe(n) des als Verlaufshilfsmittel eingesetzten Polysiloxans nach der Aushärtung des Polysiloxans in einer modifizierten, d.h. umgesetzten Form vorliegt.

Als Verankerungshilfsmittel zur Herstellung der Releaseschicht (b) geeignet ist wenigstens ein Polysiloxan, welche wenigstens eine, vorzugsweise endständige, funktionelle Gruppe ausgewählt aus der Gruppe umfassend zumindest eine Kohlenstoff-Doppelbindung aufweisende funktionelle Gruppen, vorzugsweise Vinyl-Gruppen, Allyl-Gruppen, (Meth)acrylsäure-Gruppen und (Meth)acrylsäurederivat-Gruppen, besonders bevorzugt (Meth)acrylsäureester-Gruppen, Epoxid-Gruppen, Isocyanat-Gruppen, Hydroxyl-Gruppen, Amin-Gruppen, Amid-Gruppen, CarboxylGruppen, Säureanhydrid-Gruppen, Alkoxy-Gruppen, Silan-Gruppen (Si-H-Gruppen), Alkoxysilan-Gruppen, vorzugsweise Monoalkoxysilan-, Dialkoxysilan- und Trialkoxysilan-Gruppen, aufweist. Besonders bevorzugt als Verankerungshilfsmittel zur Herstellung der Releaseschicht (b) geeignet ist wenigstens ein Polysiloxan, welche wenigstens eine, vorzugsweise endständige, funktionelle Gruppe ausgewählt aus der Gruppe umfassend Epoxid-Gruppen, (Meth)acrylsäure-Gruppen und (Meth)acrylsäurederivat-Gruppen, besonders bevorzugt (Meth)acrylsäureester-Gruppen, aufweist. Dem Fachmann ist hierbei klar, dass die zur Vernetzung eingesetzte(n) funktionelle(n) Gruppe(n) des als Verankerungshilfsmittel eingesetzten Polysiloxans nach der Aushärtung des Polysiloxans in einer modifizierten, d.h. umgesetzten Form vorliegt.

Die Releaseschicht (b) der erfindungsgemäßen Trennfolie weist vorzugsweise eine Schichtdicke von ≤ 5 µm, besonders bevorzugt von ≤ 2 µm, ganz besonders bevorzugt von 0,3 µm bis 1,5 µm auf.

Die erfindungsgemäße Trennfolie weist auf wenigstens einer ihren Oberflächen eine Releaseschicht (b) auf, besonders bevorzugt als Außenschicht auf einer Oberfläche der Schicht (s), die die festen Mikroteilchen enthält.

Die erfindungsgemäße Trennfolie weist vorzugsweise eine Schicht (a) aufgebaut aus wenigstens einem thermoplastischen Polymer, vorzugsweise aus wenigstens einem thermoplastischen Olefin-Homo-oder Copolymeren, auf. Diese Schicht (a) kann als Trägerschicht der erfindungsgemäßen Trennfolie angeordnet sein oder liegt als eine innenliegende Schicht der Trennfolie vor.

Zur Herstellung der Schicht (a) eignen sich dieselben vorstehend genannten Olefin-Homo-oder Copolymere bzw. Homo- oder Copolyamide, die auch zur Herstellung der Schicht (s) eingesetzt werden können.

Ganz besonders bevorzugt ist die Schicht (a) auf wenigstens einem Propylen-Homo-oder Copolymeren aufgebaut.

Die Schichtdicke der Schicht (a) der erfindungsgemäßen Trennfolie beträgt vorzugsweise 5 bis 30 µm, besonders bevorzugt 6 bis 15 µm.

In einer weiteren bevorzugten Ausführungsform ist die Schicht (a) der erfindungsgemäßen Trennfolie direkt mit einer Schicht (c), die vorzugsweise aus wenigstens einem Olefin-Homo-oder Copolymeren aufgebaut ist, verbunden.

Zur Herstellung der Schicht (c) eignen vorzugsweise sich dieselben vorstehend genannten Olefin-Homo-oder Copolymeren bzw. Homo- oder Copolyamide, die auch zur Herstellung der Schicht (a) bzw. Schicht (s) eingesetzt werden können.

Ganz besonders bevorzugt ist die Schicht (c) aus wenigstens einem Propylen-Homo oder Copolymeren aufgebaut.

Sofern die Schicht (c) als Außenschicht vorliegt, kann die nicht belegte Oberfläche der Schicht (c) ebenso wie die Oberfläche der Schicht (s) jeweils als Außenschicht oder anstelle der freien Oberfläche der Schicht (s) mit einer Releaseschicht (b) ausgerüstet sein.

Die Dicke der Schicht (c) der erfindungsgemäßen Trennfolie beträgt vorzugsweise 5 bis 30 µm, besonders bevorzugt 6 bis 15 µm.

In einer weiteren bevorzugten Ausführungsform der vorliegenden Erfindung kann der Schichtverbund aus Schicht (s), Schicht (a) und Schicht (c) der erfindungsgemäßen Trennfolie mit seiner freien Oberfläche, vorzugsweise mit der freien Oberfläche der Schicht (c), mit einer Schicht (d), vorzugsweise aufgebaut aus wenigstens einem Olefin-Homo-oder Copolymeren, verbunden sein.

Zur Herstellung der Schicht (d) eignen sich vorzugsweise dieselben vorstehend genannten Olefin-Homo-oder Copolymeren, die auch zur Herstellung der Schichten (s), (a) und/oder (c) eingesetzt werden können.

Ganz besonders bevorzugt kann die Schicht (d) als Außenschicht vorliegen.

Die freie Oberfläche der Schicht (d) als Außenschicht kann ebenso wie die freie Oberfläche des Schicht (s) jeweils anstelle der freien Oberfläche der Schicht (s) mit einer Releaseschicht (b) ausgerüstet sein.

Die Schichtdicke der Schicht (d) der erfindungsgemäßen Trennfolie beträgt vorzugsweise 5 bis 30 µm, besonders bevorzugt 6 bis 15 µm.

Die erfindungsgemäße Trennfolie kann gegebenenfalls eine vorzugsweise zwischen der Schicht (s) und der Schicht (a) oder der Schicht (a) und der Schicht (c) oder zwischen der Schicht (c) und der Schicht (d) oder als 2. Außenschicht angeordnete Barriereschicht (e) aufweisen.

Vorzugsweise ist diese Barriereschicht (e) eine Gasbarriereschicht, besonders bevorzugt eine Sauerstoffbarriereschicht und/oder eine Wasserdampfbarriereschicht, und/oder ganz besonders bevorzugt eine Ölbarriereschicht.

Vorzugsweise ist die Barriereschicht (e) aus wenigstens einem Ethylen-Vinylalkohol-Copolymeren, wenigstens einem Polyvinylalkohol, oder wenigstens einem Homo-oder Copolyamid, besonders bevorzugt aus wenigstens einem Homo- oder Copolyamid aufgebaut.

Zur Herstellung der Schicht (e) geeignete Ethylen-Vinylalkohol-Copolymere (EVOH) werden durch im Wesentlichen vollständige Hydrolyse von entsprechenden ethylenhaltigen Polyvinylacetaten (EVAc) erhalten. Diese vollverseiften EthylenVinylacetat-Copolymere weisen einen Verseifungsgrad ≥ 98 % und einen EthylenAnteil von 0,01-80 mol-%, vorzugsweise von 1-50 mol-% auf.

Die Schicht (e) kann auch aus wenigstens einem Polyvinylalkohol (PVOH) aufgebaut sein, der durch eine im Wesentlichen vollständige Hydrolyse von Polyvinylacetaten (PVA) gewonnen wurde und als vollverseiftes Polyvinylacetat einen Verseifungsgrad ≥ 98 % aufweist.

Zur Herstellung der Barriereschicht (e) eignen sich auch dieselben vorstehend genannten Homo- und Copolyamide, die auch zur Herstellung der Schicht (s) eingesetzt werden können.

Die Barriereschicht (e) der erfindungsgemäßen Trennfolie weist vorzugsweise eine Schichtdicke von 3 µm bis 25 µm, bevorzugt von 5 µm bis 15 µm, auf.

In einer bevorzugten Ausführungsform weist die erfindungsgemäßen Trennfolie wenigstens eine zwischen der Schicht (s) und der Schicht (a) oder der Schicht (a) und der Schicht (c) angeordnete Barriereschicht (e) auf, welche ggf. jeweils über eine Haftvermittlerschicht (f) und/oder (g) mit der Schicht (s) und/oder der Schicht (a) und/oder der Schicht (c) verbunden ist.

Als Haftvermittler können übliche Haftvermittler eingesetzt werden. Vorzugsweise bestehen die Haftvermittlerschichten (f) und (g) jeweils unabhängig voneinander aus wenigstens einem modifizierten thermoplastischen Polymer, vorzugsweise aus wenigstens einem modifizierten Polyolefin-Homo- oder Copolymeren, besonders bevorzugt aus wenigstens einem modifizierten Propylen-Homo- oder Copolymeren, welches mit wenigstens einer organischen Säure oder wenigstens einem organischen Säureanhydrid, vorzugsweise mit Maleinsäureanhydrid modifiziert ist.

Die Haftvermittlerschichten (f) und (g) der erfindungsgemäßen Trennfolie weisen vorzugsweise jeweils unabhängig voneinander eine Schichtdicke von 1 µm bis 10 µm, besonders bevorzugt von 2 µm bis 8 µm, auf.

In einer ganz bevorzugten Ausführungsform kann die erfindungsgemäße Trennfolie eine Barriereschicht (e) aus wenigstens einem Homo- oder Copolyamid aufweisen, welche jeweils über eine Haftvermittlerschicht (f) bzw. (g) mit der Schicht (s) bzw. der Schicht (c) verbunden ist, die jeweils aus einem Propylen Homo-oder Copolymer aufgebaut sind, wobei wenigstens eine freie Oberfläche der Trennfolie mit einer Releaseschicht (b) ausgerüstet ist.

In einer weiteren bevorzugten Ausführungsform kann die erfindungsgemäße Trennfolie eine mit den Mikroteilchen versehene Schicht (s) aufweisen, welche mit der Schicht (a) bzw. einen Schichtverbund aus Schicht (a) und Schicht (c) verbunden ist, die wiederum mit einer Schicht (d) verbunden sein kann, wobei die Schichten (s), (a), (c) und (d) jeweils aus wenigstens einem Propylen Homo-oder Copolymer aufgebaut sind, wobei wenigstens eine freie Oberfläche der Trennfolie, vorzugsweise die freie Oberfläche der Schicht (s), mit einer Releaseschicht (b) ausgerüstet ist und die Schicht (s) feste Mikroteilchen enthält. Jede der Schichten der erfindungsgemäßen Trennfolie weist vorzugsweise einen Schmelzpunkt auf, der um mindestens 10°C, vorzugsweise um mindestens 30°C niedriger ist als der Schmelzpunkt bzw. Erweichungspunkt der Mikroteilchen.

Die Schicht (s), ggf. die Schichten (a), (c) und/oder (d), ggf. die Barriereschicht (e) und/oder ggf. die Haftvermittlerschichten (f) und/oder (g) können, wenn notwendig, jeweils unabhängig voneinander, mit Additiven ausgewählt aus der Gruppe umfassend Antioxidantien, Antiblockmittel, Antifogmittel, Antistatika, antimikrobielle Wirkstoffe, Lichtschutzmittel, UV-Absorber, UV-Filter, Farbstoffe, Farbpigmente, dotiert sein, sofern die pulverförmigen Additive durchschnittliche Teilchengrößen aufweisen, die deutlich kleiner als die der Mikroteilchen sind.

Die Schicht (s), ggf. die Schichten (a) und/oder (c) und/oder (d), ggf. die Barriereschicht (e) und/oder ggf. die Haftvermittlerschichten (f) und/oder (g) können jeweils unabhängig voneinander, wenigstens 0,01-30 Gew.-%, vorzugsweise wenigstens 0,1-20 Gew.-%, jeweils bezogen auf das Gesamtgewicht einer einzelnen Schicht, wenigstens einen der vorstehend genannten Additive enthalten. Vorzugsweise ist die Gesamtschichtdicke der erfindungsgemäßen Trennfolie ≤ 100 µm.

In einer bevorzugten Ausführungsform kann die Schicht (s), und ggf. die übrigen Schichten der erfindungsgemäßen Trennfolie als gesamte mehrschichtige Folie in Form einer Schlauchfolie produziert und verarbeitet werden.

In einer anderen bevorzugten Ausführungsform kann die Schicht (s) und ggf. die übrigen Schichten der erfindungsgemäßen Trennfolie insgesamt als eine Cast-Mehrschichtfolie produziert und verarbeitet werden.

Dementsprechend kann die Herstellung der Schicht (s) und der ggf. vorhandenen Schichten (a), (c), (d), (e), (f) und (g) der erfindungsgemäßen Trennfolie vorzugsweise durch Co-Extrusion erfolgen.

Die Oberflächenstruktur der Schicht (s) beruht auf den in der Schicht (s) verteilten, festen Mikroteilchen, die vorzugsweise aus einem thermoplastischen Polymeren bestehen. Die Ausbildung einer solchen Oberflächenstruktur kann durch Zugabe der festen Mikroteilchen in Form eines Masterbatches in das zu dotierende, geschmolzene Matrixpolymere unter Wärmezufuhr, vorzugsweise bei einer Temperatur von 190 bis 240°C aber immer unterhalb des Schmelzpunktes der Mikroteilchen, erreicht werden, wobei die Verteilung vorzugsweise mit Hilfe eines Extruders erreicht wird. Nach dem Austritt aus dem Extruder liegen die festen Mikroteilchen in der Polymermatrix verteilt vor und bewirken so die Ausbildung der unebenen Oberflächenstruktur der Trennfolie. Dadurch ist weder eine Prägung noch eine Schaumstruktur der erfindungsgemäßen Trennfolie notwendig.

Die unregelmäßige Oberflächenstruktur der erfindungsgemäßen Trennfolie zeichnet sich dadurch aus, dass sie eine asymmetrische Struktur zumindest über eine ihrer Oberflächen praktisch über deren gesamte Breite aufweist. Insbesondere ist diese Struktur auf Erhöhungen (Erhebungen) von 10 - 270 µm gemessen von der Folienoberfläche in unregelmäßigen Abständen und unterschiedlicher Gestaltung zurückzuführen.

Die Schicht (s) oder ein Schichtverbund umfassend wenigstens eine Schicht (s), d.h. z.B. ein Schichtverbund mit einer Schicht (s), Schicht (a) und ggf. einer Schicht (c) kann auf einer oder auf beiden Oberflächen, d.h. einseitig oder beidseitig vorzugsweise nur einseitig, mit einer Mischung aus wenigstens einem nicht ausgehärteten Polysiloxan und ggf. wenigstens einem Verlaufshilfsmittel und/oder wenigstens einem Verankerungshilfsmittel beschichtet werden, und diese Mischung durch Einwirkung von Wärme oder von elektromagnetischer Strahlung oder durch Feuchtigkeit, ggf. durch Zusatz wenigstens eines UV-Initiators und/oder eines Radikalstarters in die Mischung, zur Releaseschicht (b) ausgehärtet und mit der Schicht (s) und ggf. einer der Schichten der vorstehend genannten Schichtverbunde verbunden werden. Dadurch, dass die Schicht (s) unebene Oberflächenstruktur aufweist, wird vorteilhafterweise eine feste Verankerung der Releaseschicht (b) auf der durch die Mikroteilchen strukturierten, unebenen, d. h. rauhen Oberfläche der Schicht (s) erreicht. In Folge dessen entfällt der bei der Herstellung bekannter Trennfolien mit ebener d. h. glatten Schicht nach der Beschichtung der Schicht (s) mit der Releaseschicht erforderliche Prägevorgang. Dadurch können die Nachteile von Trennfolien mit Prägestruktur hinsichtlich ihrer geringeren Stabilität bei thermischer und mechanischer Belastung wie z.B. unter Druckeinwirkung und der daraus resultierenden, zumindest an den geschädigten Stellen, ungenügenden Trennwirkung vermieden werden. Darüber hinaus wird ein Verfahrensschritt, nämlich die Prägung, eingespart. Ebenso entfällt bei der erfindungsgemäßen Trennfolie die Ausbildung einer Schaumstruktur zur Erzeugung einer besseren Trennwirkung.

Die jeweiligen Herstellungsverfahren und entsprechende Produktionsparameter sind dem Fachmann allgemein bekannt.

Jede der Schichten (s), (a), (c), (d) und (e)der erfindungsgemäßen Trennfolie kann als Oberflächenschicht einer Oberflächen-Behandlung wie z.B. einer Corona-Behandlung, einer Plasma-Behandlung und/oder einer Flamm-Behandlung unterworfen werden, vorzugsweise vor dem Aufbringen wenigstens einer Releaseschicht (b), wobei besonders bevorzugt eine Corona-Behandlung durchgeführt wird.

Die erfindungsgemäße Trennfolie kann vorzugsweise bedruckt und/oder farbig sein. Die erfindungsgemäße Trennfolie wird vorzugsweise als entfernbare Schutzfolie und/oder Abdeckfolie eingesetzt.

Ein weiterer Gegenstand der vorliegenden Erfindung ist daher die Verwendung der erfindungsgemäßen Trennfolie als entfembare Schutz- oder Abdeckfolie, vorzugsweise für selbstklebenden Etiketten, Klebebänder, Aufkleber oder selbstklebende Abdeckbahnen, wie Dachbahnen, vorzugsweise für selbstklebende Bitumen-Dachbahnen.

Ein weiterer Gegenstand der vorliegenden Erfindung ist daher eine aufrollbare, selbstklebende Dachbahn versehen mit einer erfindungsgemäßen Trennfolie als entfernbare Schutz- und/oder Trennfolie bzw. Abdeckfolie.

Ein weiterer Gegenstand der vorliegenden Erfindung ist eine aufgerollte, selbstklebende Bitumen-Dachbahn versehen mit einer erfindungsgemäßen Trennfolie als entfernbare Schutz- und/oder Trennfolie bzw. Abdeckfolie.

### Bestimmung der Trennkraft (Trennwirkung)

Die Trennwirkung der erfindungsgemäßen Trennfolie gegen einen Klebstoff wird durch die Trennkraft in [cN/cm] angegeben, die zum Trennen, d.h. Entfernen der Trennfolie vom Klebstoff erforderlich ist.

Auf eine Probe der erfindungsgemäßen Trennfolie oder einer Vergleichsfolie, für die die Trennkraft ermittelt werden soll, wird hierbei über ihre gesamte Breite blasenfrei ein Testklebeband aufgeklebt. Als Testklebebänder werden Tesafix A 7475 und Tesafix K 7476 verwendet, die jeweils eine Breite von 25 mm aufweisen. Die Probe wird so zugeschnitten, dass längsseitig vom jeweiligen Testklebeband jeweils ein Rand von 2 cm an Trennfolie verbleibt, der nicht mit dem Testklebeband versehen ist. Die Probe wird in mehrere jeweils ca. 30 cm-lange Streifen geschnitten. Anschließend werden die Proben-Streifen zwischen dünne Blechplatten gelegt und mit Gewichten beschwert, wobei die Proben-Streifen zwischen den Platten so verteilt sein müssen, dass alle Proben-Streifen gleichmäßig belastet werden (Belastung der Proben-Streifen: 6,8 kp bzw. 70 g/cm²). Danach werden die Proben-Streifen über den Zeitraum von 20 h bei 70°C (Proben-Streifen mit Tesafix A 7475) bzw. 40°C (Proben-Streifen mit Tesafix K 7476) im Trockenschrank gelagert. Anschließend wird die nicht das Testklebeband aufweisende Seite des Probenstreifens mittels eines Doppelklebebands in eine Metallschiene (350 x 40 mm) eines elektronischen Zerreißgeräts eingebracht, die mit einer unteren Spannklemme fixiert wird. Ein steifer, ca. 400 mm langer Folienstreifen wird am Testklebeband des Probenstreifens befestigt und mittels einer oberen Spannklemme im Zerreißgerät fixiert. Das Testklebeband wird nun unter einem Winkel von annähernd 180° mit einer Abzugsgeschwindigkeit von bis zu 1800 mm/min abgezogen und zur Ermittlung der Trennkraft ein Kraftdiagramm aufgezeichnet. Es wird jeweils ein Mittelwert aus 3 Messungen ermittelt.

### High-Temperature-Bitumen-Test (HTB-Test)

Der HTB-Test dient zur Bestimmung der maximalen Temperatur, bei der sich die Trennfolie noch von einem Klebstoff ablösen lässt. Als Klebstoff wurde Bitumen verwendet.

Eine auf Bitumen aufgeklebte Probe der erfindungsgemäße Trennfolie oder Vergleichsfolie wird auf zwei Stahlplatten am Boden eines Trockenschranks gelegt und die Probe bei einer Temperatur von mindestens 90°C solange getempert, bis ein Thermometer, dessen Temperatur-Messfühler im hinteren Bereich der Probe zwischen Trennfolie und Bitumen leicht in das Bitumen eingedrückt worden ist, eine konstante Temperatur anzeigt und die Trennfolie nicht mehr vom Bitumen zu trennen ist. Anschließend wird der Trockenschrank ausgeschaltet. Bei geöffneter Tür fällt nun die Temperatur der Probe langsam ab. Durch gleichmäßiges Ziehen an der Trennfolie der Probe wird beurteilt, ob eine Trennung vom Bitumen möglich ist. Die HTB-Temperatur ist diejenige Temperatur, bei der sich die Trennfolie der Probe rückstandsfrei vom Bitumen der Probe ablösen lässt.

Das nachfolgende Beispiel und Vergleichsbeispiel dienen der Erläuterung der Erfindung, sind jedoch nicht einschränkend auszulegen.

### I. Chemische Charakterisierung der eingesetzten Rohstoffe:

| | |
|---|---|
| Inspire 137: | Propylen-Copolymer der Firma Dow |
| Durethan C38F: | Copolyamid der Firma Lanxess |
| Admer QB520E: | Haftvermittler der Firma Mitsui |
| AS6104LD | Master batch aus 25 Gew.% dispergierten Polyethylen-Teilchen mit ultrahohem Molekulargewicht und einer Teilchengröße von 70 µm - 300 µm und Schmelzpunkt ≥ 240 °C und 75 Gew.% Polyethylen mit Schmelzpunkt um 130 °C der Fa. Constab |
| Remafin RCL: | in Polyethylen (40 Gew.%) dispergiertes Titan(IV)dioxid-Pulver (Teilchengröße < 20 µm) (60 Gew.%) der Firma Clariant |
| L066: | Silikonöl der Firma Wacker (Verlaufshilfsmittel) |
| Anchorsil 2000 | Verankerungshilfsmittel der Firma Momentive |
| Polysiloxan: | Polysiloxan mit Vernetzer und Katalysator der Firma Wacker |

### II. Herstellung der Trennfolien

Die Trennfolien des Vergleichsbeispiels (**V**) sowie des Beispiels 1 (**B1**) bestehen jeweils aus sechs Schichten und weisen eine Gesamtschichtdicke von jeweils 26 µm auf. Die einzelnen Schichten der Trennfolien grenzen jeweils in der Reihenfolge unmittelbar aneinander an, in der sie nachstehend aufgeführt sind. Die einzelnen Schichten (a), (c), (e), (f) und (g) der Trennfolien des Beispiels **B1** bzw. des Vergleichsbeispiel V wurden jeweils durch Blasfolien-Co-Extrusion hergestellt und in einem nachfolgenden Arbeitsgang jeweils mit einer Releaseschicht (b) beschichtet. Die unebene, d. h. rauhe Struktur der Oberfläche der Trennfolie des Beispiels **B1** beruht auf nicht-aufschmelzenden, in der Schicht (a) verteilten Mikroteilchen. Die Trennfolie des Vergleichsbeispiels **V** weist dagegen eine glatte Oberflächenstruktur auf.

### III. Aufbau der Trennfolien

Alle nachfolgenden %-Angaben sind jeweils Gew.-%.

### III.1 Beispiel (B1) und Vergleich (V)

| *Schichtaufbau* | *Rohstoffe **V*** | *Rohstoffe **B1*** |
|---|---|---|
| Releaseschicht (b) Schichtdicke (1,0 µm) | Polysiloxan (92,8%), Anchorsil 2000 (2,6%), L066 (4,6%) | Polysiloxan (92,8%), Anchorsil 2000 (2,6%), L066 (4,6%) |
| Schicht (a) bzw. Schicht (s) (Schichtdicke 7,5 µm) | Inspire 137 (90%), Remafin RCL (10%) | Inspire 137 (80%), Remafin RCL (10%) AS 6104 LD (10%) |
| Haftvermittlerschicht (f) (Schichtdicke 2,5 µm) | Admer QB520E (100%), | Admer QB520E (100%), |
| Barriereschicht (e) (Schichtdicke 5,0 µm) | Durethan C38F (100%), | Durethan C38F (100%), |
| Haftvermittlerschicht (g) (Schichtdicke 2,5 µm) | Admer QB520E (100%), | Admer QB520E (100%), |
| Schicht (c) (Schichtdicke 7,5 µm) | Inspire 137 (90%), Remafin RCL (10%) | Inspire 137 (90%), Remafin RCL (10%) |

### IV. Bestimmung der Trennkraft und der HBT-Temperatur

Von der Trennfolien B1 und der Vergleichsfolie **V** wurden jeweils nach der vorstehend beschriebenen Methode die Trennkraft bzw. die HTB-Temperatur ermittelt.

| Beispiel/ Vergleichsbeispiel | Trennkraft (cN/cm) K 7476 | HTB-Temperatur (°C) Bitumen Vedatop SU |
|---|---|---|
| **V** | 4,9 | 99 |
| **B1** | 1,9 | 108 |

## Patentansprüche

1. Eine Trennfolie mit unebener Oberflächenstruktur **dadurch gekennzeichnet, dass** die unebene Oberflächenstruktur nicht geprägt ist und nicht auf einer Schaumstruktur beruht und die Trennfolie wenigstens eine Schicht (s) aufgebaut aus wenigstens einem thermoplastischen Polymeren als Matrixpolymeren umfasst, in der feste Mikroteilchen mit einer Teilchengröße von mindestens 50 µm und mit einem um mindestens 10°C höheren Schmelzpunkt als den des Matrixpolymeren verteilt vorliegen, und von deren Oberflächen zumindest eine mit einer Releaseschicht (b) als Außenschicht aufgebaut aus wenigstens einem ausgehärteten Polysiloxan ausgerüstet ist.

2. Eine Trennfolie nach Anspruch 1, **dadurch gekennzeichnet, dass** die Mikroteilchen eine Teilchengrößenverteilung von 50 µm bis 500 µm, vorzugsweise von 50 µm bis 300 µm, ausweisen.

3. Eine Trennfolie nach Anspruch 1 oder 2, **dadurch gekennzeichnet, dass** das die Mikroteilchen aus einem thermoplastischen Polymeren, vorzugsweise auf einem Olefin-Homo- oder Copolymeren oder aus einer anorganischen Verbindung oder einem anorganischen Material aufgebaut sind.

4. Eine Trennfolie nach einem der Ansprüche 1 - 3, **dadurch gekennzeichnet, dass** der Schmelzpunkt der Mikroteilchen um wenigstens 30°C höher ist als der des Matrixpolymeren.

5. Eine Trennfolie nach einem der Ansprüche 1 bis 4, **dadurch gekennzeichnet, dass** die Schicht (s) eine mit einer Releaseschicht (b) ausgerüstete Oberfläche aufweist.

6. Eine Trennfolie nach einem der Ansprüche 1 bis 5, **dadurch gekennzeichnet, dass** die unebene Oberflächenstruktur Erhebungen aufweist, die eine Höhe bis zu 300 µm aufweisen.

7. Eine Trennfolie nach einem der Ansprüche 1 - 6, **dadurch gekennzeichnet, dass** die Schicht (s) 0,1 - 20 Gew.-%, vorzugsweise 2 - 10 Gew.-%, bezogen auf das Gesamtgewicht der Schicht (s), an festen Mikroteilchen aufweist.

8. Eine Trennfolie nach einem der Ansprüche 1 bis 7, **dadurch gekennzeichnet, dass** die Releaseschicht (b) wenigstens ein Verlaufshilfsmittel und/oder wenigstens ein Verankerungshilfsmittel enthält.

9. Eine Trennfolie nach Anspruch 8, **dadurch gekennzeichnet, dass** das Verlaufshilfsmittel in einer Menge von 1-10 Gew.-% und/oder das Verankerungshilfsmittel in einer Menge von 1-5 Gew.-% in der Releaseschicht (b) enthalten ist, jeweils bezogen auf das Gesamtgewicht der Releaseschicht (b).

10. Eine Trennfolie nach einem der Ansprüche 1 bis 9, **dadurch gekennzeichnet, dass** die Schicht (s) mit ihrer freien Oberfläche mit einer Schicht (a) basierend auf wenigstens einem Olefin-Homo-oder Copolymer oder einem Schichtverbund aus einer Schicht (a) und einer Schicht (c) verbunden ist, die keine festen Mikroteilchen enthält bzw. enthalten.

11. Eine Trennfolie nach einem der Ansprüche 1 bis 10, **dadurch gekennzeichnet, dass** sie wenigstens eine an die Schicht (a) angrenzende Barriereschicht (e) aufweist, die ggf. über eine Haftvermittlerschicht (f) bzw. (g) mit der Schicht (a) bzw. der Schicht (c) verbunden ist.

12. Eine Trennfolie nach einem der Ansprüche 1 bis 11, **dadurch gekennzeichnet, dass** sie eine Barriereschicht (e) aufgebaut aus wenigstens einem Homo- oder Copolyamid aufweist, welche jeweils über eine Haftvermittlerschicht (f) bzw. (g) mit Schicht (a) bzw. der Schicht (c) verbunden ist, die vorzugsweise jeweils aus einem Propylen Homo-oder Copolymeren aufgebaut sind.

13. Eine Verwendung einer Trennfolie nach einem der Ansprüche 1 bis 12 als entfernbare Schutz- oder Abdeckfolie, vorzugsweise für Selbstklebeetiketten, Klebebänder, Aufklebern oder selbstklebende Dachbahnen, besonders bevorzugt für selbstklebende Bitumen-Dachbahnen.

14. Eine aufrollbare, selbstklebende Dachbahn, vorzugsweise eine Bitumen-Dachbahn, versehen mit einer Trennfolie als entfernbare Schutz- oder Abdeckfolie nach einem der Ansprüche 1 bis 12.

## Claims

1. Release film having a nonplanar surface structure, **characterized in that** the nonplanar surface structure is unembossed and is not based on a foam structure, and the release film comprises at least one layer (s) constructed from at least one thermoplastic matrix polymer and comprising distributed solid microparticles having a particle size of at least 50 µm and having a melting point at least 10°C higher than that of the matrix polymer, and at least one of whose surfaces bears a release layer (b) as outer layer, constructed from at least one cured polysiloxane.

2. Release film according to Claim 1, **characterized in that** the microparticles exhibit a particle size distribution of 50 µm to 500 µm, preferably of 50 µm to 300 µm.

3. Release film according to Claim 1 or 2, **characterized in that** the microparticles are constructed from a thermoplastic polymer, preferably of an olefin homopolymer or copolymer, or from an inorganic compound or an inorganic material.

4. Release film according to any of Claims 1-3, **characterized in that** the melting point of the microparticles is higher by at least 30°C than that of the matrix polymer.

5. Release film according to any of Claims 1 to 4, **characterized in that** the layer (s) has a surface bearing a release layer (b).

6. Release film according to any of Claims 1 to 5, **characterized in that** the nonplanar surface structure has elevations which have a height of up to 300 µm.

7. Release film according to any of Claims 1-6, **characterized in that** the layer (s) has 0.1-20 wt%, preferably 2-10 wt%, based on the total weight of the layer (s), of solid microparticles.

8. Release film according to any of Claims 1 to 7, **characterized in that** the release layer (b) comprises at least one flow control assistant and/or at least one anchoring assistant.

9. Release film according to Claim 8, **characterized in that** the flow control assistant is present in an amount of 1-10 wt% and/or the anchoring assistant is present in an amount of 1-5 wt% in the release layer (b), based in each case on the total weight of the release layer (b).

10. Release film according to any of Claims 1 to 9, **characterized in that** the layer (s) is joined by its free surface to a layer (a) based on at least one olefin homopolymer or copolymer or on a laminate comprising a layer (a) and a layer (c), which comprises or comprise no solid microparticles.

11. Release film according to any of Claims 1 to 10, **characterized in that** it has at least one barrier layer (e) which borders the layer (a) and which is joined to the layer (a) or the layer (c) optionally via an adhesion promoter layer (f) or (g), respectively.

12. Release film according to any of Claims 1 to 11, **characterized in that** it has a barrier layer (e) constructed from at least one homopolyamide or copolyamide and joined in each case via an adhesion promoter layer (f) or (g) to layer (a) or to layer (c), respectively, which are preferably each constructed from a propylene homopolymer or copolymer.

13. Use of a release film according to any of Claims 1 to 12 has a removable protective or liner film, preferably for self-adhesive labels, adhesive tapes, stickers, or self-adhesive roofing sheets, more preferably for self-adhesive bitumen roofing sheets.

14. Self-adhesive roofing sheet, preferably a bitumen roofing sheet, which can be rolled up and is provided with a release film as removable protective or liner film according to any of Claims 1 to 12.

## Revendications

1. Feuille de séparation dotée d'une structure superficielle irrégulière **caractérisée en ce que** la structure superficielle irrégulière n'est pas gaufrée et n'est pas basée sur une structure de mousse et la feuille de séparation comprend au moins une couche (s) composée d'au moins un polymère thermoplastique en tant que polymère de matrice, dans laquelle des microparticules solides dotées d'une grosseur de particule d'au moins 50 µm et dotées d'un point de fusion plus élevé d'au moins 10 °C que celui du polymère de matrice sont présentes de manière répartie, et de leurs surfaces au moins une est pourvue d'une couche de dégagement (b) en tant que couche externe composée d'au moins un polysiloxane durci.

2. Feuille de séparation selon la revendication 1, **caractérisée en ce que** les microparticules présentent une granulométrie de 50 µm à 500 µm, de préférence de 50 µm à 300 µm.

3. Feuille de séparation selon la revendication 1 ou 2, **caractérisée en ce que** les microparticules sont composées d'un polymère thermoplastique, de préférence d'un homopolymère ou d'un copolymère d'oléfines ou d'un composé inorganique ou d'un matériau inorganique.

4. Feuille de séparation selon l'une quelconque des revendications 1 à 3, **caractérisée en ce que** le point de fusion des microparticules est plus élevé d'au moins 30 °C que celui du polymère de matrice.

5. Feuille de séparation selon l'une quelconque des revendications 1 à 4, **caractérisée en ce que** la couche (s) présente une surface pourvue d'une couche de dégagement (b).

6. Feuille de séparation selon l'une quelconque des revendications 1 à 5, **caractérisée en ce que** la structure superficielle irrégulière présente des élévations, qui présentent une hauteur allant jusqu'à 300 µm.

7. Feuille de séparation selon l'une quelconque des revendications 1 à 6, **caractérisée en ce que** la couche (s) présente 0,1 à 20 % en poids, de préférence 2 à 10 % poids, par rapport au poids total de la couche (s), de microparticules solides.

8. Feuille de séparation selon l'une quelconque des revendications 1 à 7, **caractérisée en ce que** la couche de dégagement (b) contient au moins un auxiliaire de dilatation et/ou au moins un auxiliaire d'ancrage.

9. Feuille de séparation selon la revendication 8, **caractérisée en ce que** l'auxiliaire de dilatation est contenu en une quantité de 1 à 10 % en poids et/ou l'auxiliaire d'ancrage est contenu en une quantité de 1 à 5 % en poids dans la couche de dégagement (b), à chaque fois par rapport au poids total de la couche de dégagement (b).

10. Feuille de séparation selon l'une quelconque des revendications 1 à 9, **caractérisée en ce que** la couche (s) est reliée, avec sa surface libre, avec une couche (a) à base d'au moins un homopolymère ou copolymère d'oléfines ou un composite stratifié composé d'une couche (a) et d'une couche (c), qui ne contient, respectivement ne contiennent aucune particule solide.

11. Feuille de séparation selon l'une quelconque des revendications 1 à 10, **caractérisée en ce qu'**elle présente au moins une couche barrière (e) adjacente à la couche (a), qui est éventuellement reliée à la couche (a), respectivement à la couche (c) par l'intermédiaire d'une couche de promoteur d'adhérence (f), respectivement (g).

12. Feuille de séparation selon l'une quelconque des revendications 1 à 11, **caractérisée en ce qu'**elle présente une couche barrière (e) composée d'au moins un homopolyamide ou copolyamide, qui est reliée à chaque fois à la couche (a), respectivement à la couche (c) par l'intermédiaire d'une couche de promoteur d'adhérence (f), respectivement (g), qui est composée de préférence à chaque fois d'un homopolymère ou d'un copolymère de propylène.

13. Utilisation d'une feuille de séparation selon l'une quelconque des revendication 1 à 12 en tant que feuille de protection ou de recouvrement retirable, de préférence pour des étiquettes autocollantes, des rubans adhésifs, des autocollants ou pour des couvertures de toit autocollantes, particulièrement préférablement pour des couvertures de toit bituminées et autocollantes.

14. Couverture de toit autocollante, enroulable, de préférence couverture de toit bituminée, pourvue d'une feuille de séparation en tant que feuille de protection ou de recouvrement retirable selon l'une quelconque des revendications 1 à 12.
